# EUROPEAN PATENT APPLICATION

(11) **EP 4 572 038 A1**
(43) Date of publication of application: **18.06.2025**
(21) Application number: 24848700.1
(22) Date of filing: 13.06.2024
(51) Int. Cl.: H01S 3/225, H01S 3/036

(54) **GAS PURIFICATION APPARATUS AND GAS PURIFICATION METHOD**

(30) Priority: 31.07.2023 JP 2023123950
(71) Applicant: Kanken Techno Co., Ltd., Nagaokakyo-shi, Kyoto 617-0833 (JP)
(72) Inventor: IKEOKU, Tetsuya, Nagaokakyo-shi, Kyoto 617-0833 (JP); OGURA, Akihiko, Nagaokakyo-shi, Kyoto 617-0833 (JP); KUZUOKA, Hiroki, Nagaokakyo-shi, Kyoto 617-0833 (JP); TSUKADA, Tsutomu, Nagaokakyo-shi, Kyoto 617-0833 (JP); YANAGISAWA, Michihiko, Nagaokakyo-shi, Kyoto 617-0833 (JP); MORIHARA, Atsushi, Nagaokakyo-shi, Kyoto 617-0833 (JP); KATO, Yoshihiko, Nagaokakyo-shi, Kyoto 617-0833 (JP)
(74) Representative: HGF
(86) International application number: PCT/JP2024/021511
(87) International publication number: WO 2025/028039

(57) **Abstract**

Provided is a gas purification apparatus (100) capable of purifying, with excellent controllability, laser gas that is used in a laser-light generation device (1). The gas purification apparatus (100) purifies recovered gas recovered from the laser-light generation device (1) that uses the laser gas, and supplies the recovered gas that has been purified to the laser-light generation device (1). The gas purification apparatus (100) includes a flow-rate control device (MFC) that controls a flow rate of the recovered gas, a constant-volume supply device (15) that is provided downstream of the flow-rate control device (MFC) and that supplies an additive gas, and a purifier (16) provided downstream of the constant-volume supply device (15).

## Description

### Technical Field

The present invention relates to a gas purification apparatus and a gas purification method for a laser device.

### Background Art

A laser-light generation device such as an excimer laser device is used in a lithography process or the like in manufacturing a semiconductor device. When the excimer laser device is repeatedly used, impurities (e.g., perfluorocarbon) are generated in laser gas inside a laser chamber, so that a desired output of laser light cannot be obtained. In this case, the laser gas needs to be replaced. However, the laser gas includes expensive gas, and therefore a device for purifying and recycling the laser gas is known.

### Citation List

### [Patent Literature]

[PTL 1] Japanese Laid-Open Patent Publication No. H11-54851
[PTL 2] WO2015/076415

### Summary of Invention

### Technical Problem

Laser gas contains a component (e.g., xenon) having an extremely low trace concentration, such as a few ppm, for stabilizing discharge. The concentration of this component becomes lower than a predetermined concentration range, and the addition (replenishment) thereof is required in some cases. However, it is difficult to control such a trace concentration.

The present invention has been made in view of the above-described problem, and an object of the present invention is to provide a gas purification apparatus capable of purifying, with excellent controllability, laser gas that is used in a laser-light generation device.

### Solution to Problem

A gas purification apparatus according to the present invention is directed to a gas purification apparatus for purifying recovered gas recovered from a laser-light generation device that uses laser gas and for supplying the recovered gas that has been purified to the laser-light generation device, the gas purification apparatus including:
a flow-rate control device that controls a flow rate of the recovered gas;
a constant-volume supply device that is provided downstream of the flow-rate control device and that supplies an additive gas; and
a purifier provided downstream of the constant-volume supply device.

Since the gas purification apparatus has such a configuration, the gas purification apparatus that performs purification with excellent controllability can be provided.

According to the present invention, in the gas purification apparatus having the above-described configuration, the constant-volume supply device may discretely supply the additive gas.

Since the gas purification apparatus has such a configuration, an addition amount of the additive gas can be controlled by the number of jets of the additive gas.

According to the present invention, in the gas purification apparatus having the above-described configuration,
the constant-volume supply device may include a constant volume portion, a first valve, and a second valve, and
the first valve and the second valve may be located at both ends of the constant volume portion.

Since the constant-volume supply device has such a configuration, the capacity of the constant-volume portion geometrically determined allows the amount of the additive gas to be precisely determined.

According to the present invention, the gas purification apparatus having the above-described configuration may include:
a first storage tank provided upstream of the flow-rate control device; and
a second storage tank provided downstream of the purifier.

The first storage tank and the second storage tank may be connected to each other so as to be allowed to communicate with each other or to be blocked from each other.

Since the gas purification apparatus has such a configuration, re-purification of the recovered gas is allowed, and further, quality assurance of the recovered gas can be improved.

According to the present invention, the gas purification apparatus having the above-described configuration may include a gas analyzer.

The gas analyzer may perform component analysis of gas in the first storage tank.

Since the gas purification apparatus has such a configuration, quality control of the recovered gas can be performed.

A method for purifying laser gas according to the present invention includes:
a recovery step of recovering laser gas from a laser-light generation device;
a recovered-gas analysis step of analyzing the gas that has been recovered and determining whether or not an additive gas needs to be added;
an addition step of adding, performed by a constant-volume supply device, the additive gas, if it has been determined, in the recovered-gas analysis step, that the additive gas needs to be added;
a purification step of purifying the recovered gas;
a purified-gas analysis step of performing component analysis of the recovered gas purified in the purification step and determining whether or not re-purification is necessary; and
a re-purification step of performing the purification step, if it has been judged, in the purified-gas analysis step, that re-purification is necessary.

Since the gas purification method is configured as described above, precise control of each component in the recovered gas, and quality control and assurance of the recovered gas can be improved.

### Advantageous Effects of Invention

The present invention can provide a gas purification apparatus capable of purifying, with excellent controllability, laser gas that is used in the laser-light generation device.

### Brief Description of Drawings

[FIG. 1] FIG. 1 schematically shows main components of a gas purification apparatus 100.
[FIG. 2] FIG. 2 shows a purification flowchart for gas recovered from a laser chamber.
[FIG. 3] FIG. 3 is sectional views each showing a main configuration of a gas supply control device 15, FIG. 3(A) shows a connection relationship in the gas supply control device 15 of the gas purification apparatus 100, and FIGS. 3(B), (C), (D) are sectional views each showing an operation of the gas supply control device 15.
[FIG. 4] FIG. 4 shows configuration examples of a purifier 16 in a non-limiting manner, FIG. 4(A) shows an example of a configuration including a first purifier 16a, a second purifier 16b, and a third purifier 16c, and FIG. 4(B) shows an example of a configuration including the first purifier 16a, the second purifier 16b, the third purifier 16c, and a fourth purifier 16d.

### Description of Embodiment

Hereinafter, an embodiment according to the present invention will be described with reference to the drawings. However, the following embodiment is not intended at all to provide a limiting interpretation in determining the gist of the present invention. Moreover, the same reference signs may be given to the same or similar members, and the description thereof may be omitted.

Furthermore, the terms such as "parallel", "orthogonal", "identical", "vertical", and, "horizontal", values of lengths or angles (orientation), and the like that are used for specifying shapes, geometrical conditions, and the degree thereof in the present specification, shall be interpreted so as to include the range in which a similar function can be expected without being bound by strict meanings.

### (Embodiment 1)

Hereinafter, examples of an embodiment of a gas purification apparatus 100 will be described with reference to the drawings.

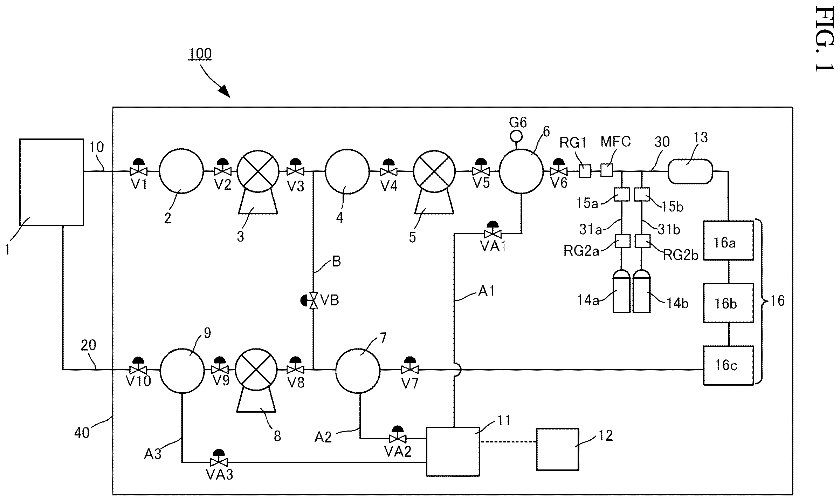

FIG. 1 schematically shows main components of the gas purification apparatus 100. As shown in FIG. 1, the gas purification apparatus 100 is connected to a laser chamber of an excimer-laser-light generation device 1 through a pipe 10 (recovery pipe) and a pipe 20 (supply pipe). The pipe 10 and the pipe 20 are connected to each other through a pipe 30 (main pipe).

The number of the excimer-laser-light generation devices 1 connected to one gas purification apparatus 100 is not necessarily limited to one, and a plurality of the excimer-laser-light generation devices 1 may be connected to one gas purification apparatus.

The gas purification apparatus 100 includes, in order from the pipe 10 side, a first tank 2, a first pump 3, a second tank 4, a second pump 5, a third tank 6, a fourth tank 7, a third pump 8, and a fifth tank 9. A purifier 16 (impurity removal device) is provided between the third tank 6 and the fourth tank 7. The purifier 16 removes impurities (e.g., CF₄, oxygen, water, etc.) included in laser gas.

These components are connected to each other through the pipe 30.

The first tank 2 communicates with the laser chamber through the pipe 10, and the fifth tank 9 communicates with the laser chamber through the pipe 20.

Laser gas to be used for generating laser light is recovered from the laser chamber of the laser-light generation device 1 through the pipe 10 to the gas purification apparatus 100, undergoes purification treatment, and then is returned through the pipe 20 from the gas purification apparatus 100 to the laser chamber. Hereinafter, the pipe 10 side may be referred to as upstream side, and the pipe 20 side may be referred to as downstream side.

A known device may be used as the laser-light generation device 1, which includes a laser chamber filled with laser gas. A known laser gas is used as the laser gas. As a non-limiting example thereof, a mixed gas of neon (Ne), a halogen gas (F₂ or the like), and another noble gas (xenon (Xe), krypton (Kr), argon (Ar), or the like) is used, and fill pressure is usually about 200 to 600 kPa. A known ratio may be used as the component ratio (mixing ratio) of the laser gas.

The gas purification apparatus 100 includes a control device 12, and the control device 12 controls opening and closing of valves provided to the pipes, and can control operation and stop of the first pump 3, the second pump 5, and the third pump 8 based on a predetermined pressure. The first, second, and third pumps may be configured to drive autonomously while detecting pressures without depending on the control device 12, or to cope with both autonomous driving and control by the control device 12.

The tanks respectively include pressure gages, and each pressure gage may measure the pressure of gas in the corresponding tank. The control device 12 can receive values from the pressure gages, to monitor the pressure of gas in each tank.

In addition, a measurement result obtained by a gas analyzer 11 provided in the gas purification apparatus 100 is inputted to the control device 12.

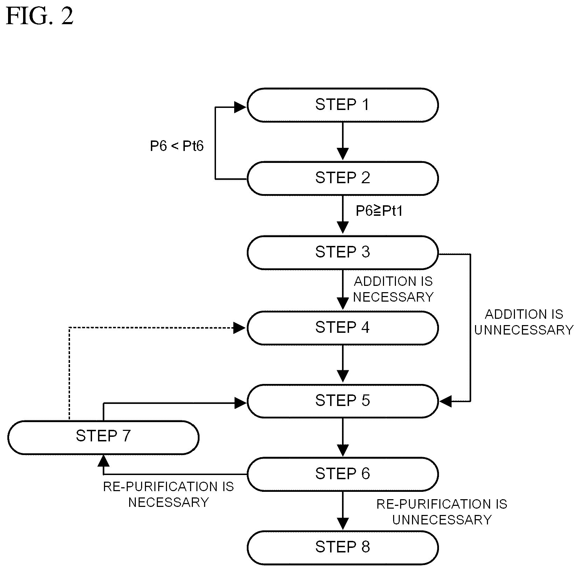

Hereinafter, a laser-gas purification operation by the gas purification apparatus 100 will be described in detail. FIG. 2 shows a purification flowchart for gas recovered from the laser chamber.

Upon receiving a request for purification of gas discharged from the laser-light generation device 1, the control device 12 performs the purification flow described below.

The control device 12 can communicate with each valve and each pump by a wireless or wired communication means, and performs opening/closing control of each valve and drive/stop control of each pump in each step.

In the following descriptions, each valve that is not particularly specified is in a closed state.

### Step 1 (gas recovery step)

A valve V1 and a valve V2 respectively positioned upstream and downstream of the first tank 2, and a valve V3 positioned downstream of the first pump 3 are set to an open state. Then, gas recovered from the laser-light generation device 1 (laser chamber) (hereinafter, referred to as recovered gas) is introduced through the pipe 10 (recovery pipe) into the first tank 2 (recovery tank), and then, is fed under pressure to the second tank 4 (first storage tank) by the first pump 3.

When the pressure of the recovered gas stored in the second tank 4 reaches a predetermined pressure (storage pressure), for example, 100 kPa or higher and 400 kPa or lower as a non-limiting example, the valve V3 is closed, the first pump 3 is stopped, and the process proceeds to step 2.

### Step 2 (gas-pressure boosting step)

The valve V3 is set to a closed state, and a valve V4 and a valve V5 positioned respectively upstream and downstream of the second pump 5 are set to an open state. Then, the recovered gas in the second tank 4 is fed under pressure to the third tank 6 (boosting tank) by the second pump 5, and the pressure of the recovered gas is boosted in the third tank 6.

A pressure gage G6 is provided to the third tank 6, and measures the pressure of the gas in the third tank 6. The control device 12 obtains a measurement value P6 by the pressure gage G6, and if the control device 12 determines that the pressure has reached a predetermined threshold Pt1 (e.g., 600 kPa to 900 kPa) (P6≥Pt1), the control device 12 sets the valve V5 to a closed state and stops the second pump 5, and the process proceeds to step 3.

If the increase in pressure in the third tank 6 saturates and the pressure does not reach the predetermined threshold, the process returns to step 1. The control device 12 repeatedly performs step 1 and step 2 until the pressure in the third tank 6 reaches the predetermined threshold.

When a pump capable of driving in a wide range (wide pressure range) is used as the second pump 5, the first tank 2, the first pump 3, the valve V1, and the valve V2 may be unnecessary. In this case, a step (gas recovery and gas-pressure boosting step) obtained by combining step 1 and step 2 is performed. Specifically, the valves V3, V4, V5 may be set to an open state and a valve V6 may be set to a closed state, and then the recovered gas may be fed under pressure to the third tank 6 by the second pump 5. If the control device 12 determines that the measurement value P6 of the pressure of the gas in the third tank 6 has reached the threshold Pt1 (P6≥Pt), the control device 12 sets the valve V3 and the valve V4 to a closed state and stops the second pump 5, and the process proceeds to step 3.

### Step 3 (recovered-gas analysis step)

The valve V5, and the valve V6 positioned downstream of the third tank 6 are set to a closed state, and a valve VA1 provided to a pipe A1 that connects the third tank 6 to the gas analyzer 11 is set to an open state. Then, the concentration of each component in the recovered gas in the third tank 6 is measured by the gas analyzer 11. Output of the gas analyzer 11 is outputted to the control device 12. A mass spectrometer may be used as the gas analyzer 11, for example.

The control device 12 makes judgement, for each measured component, on whether or not the concentration of each component (e.g., neon, krypton, xenon, argon, or the like) constituting the laser gas is in a predetermined concentration range, and determines whether or not an additive gas needs to be added.

The control device 12 determines that a component having a concentration lower than the predetermined concentration range needs to be added (replenishment), and calculates an addition amount (doping amount) of the additive gas so as to allow the concentration of such a component to be included in the predetermined concentration range, and the process proceeds to step 4.

For example, the gas analyzer 11 measures the concentration of xenon in the recovered gas, and, if the concentration of xenon has been determined to be lower than the predetermined concentration, the control device 12 determines that addition (replenishment) of xenon is necessary, and calculates the amount of xenon to be added (doped) to the recovered gas so as to allow the concentration of xenon to fall in the predetermined concentration range. Then, the process proceeds to step 4.

If it has been determined that no addition is necessary for all the components, the process proceeds to step 5.

### Step 4 (addition process)

The valve V5, and a valve V8 positioned downstream of the fourth tank 7 (second storage tank) are set to a closed state, and the valve V6, and a valve V7 positioned upstream of the fourth tank 7 are set to an open state such that the third tank 6 and the fourth tank 7 communicate with each other. In this state, the recovered gas that has accumulated in the third tank 6 is caused to flow into the pipe 30 positioned downstream thereof. The recovered gas is adjusted so as to have a predetermined pressure (PG1) by a pressure regulator RG1, and the flow rate of the recovered gas is controlled by a flow-rate control device (mass flow controller) MFC provided downstream of the pressure regulator RG1.

A gas cylinder 14 filled with the additive gas is connected to a pipe 31 (addition pipe), and the pipe 31 is connected to the pipe 30 at a position downstream of the flow-rate control device MFC.

The pipe 31 is provided with a pressure regulator RG2 (RG2a, RG2b), and a gas supply control device 15 (constant-volume supply device) described below, and the additive gas in the gas cylinder 14 is adjusted by the pressure regulator RG2 so as to have a predetermined pressure (PG2), and flows into the gas supply control device 15.

The control device 12 controls the gas supply control device 15 to allow the additive gas (e.g., xenon, argon, or another gas) to flow into the pipe 31 from the gas cylinder 14, based on the calculated addition amount. The recovered gas and the additive gas merge at a connection point between the pipe 31 and the pipe 30.

When a component having a trace concentration, for example, xenon, is added, xenon gas diluted with neon (mixed gas of neon and xenon) may be used.

When a plurality of kinds, for example, two kinds, of additive gases are supplied, a first gas cylinder 14a and a second gas cylinder 14b may be provided as the gas cylinder 14, pipes 31a, 31b may be connected to the first gas cylinder 14a and the second gas cylinder 14b, and the pressure regulators RG2a, RG2b and gas supply control devices 15a, 15b may be provided to the pipes 31a, 31b, respectively, whereby the addition amount of each additive gas may be controlled.

FIG. 1 shows an example in which the first gas cylinder 14a and the second gas cylinder 14b are included.

As described below, the gas supply control device 15 is a constant-volume supply device, causes a predetermined volume of the additive gas to flow into the pipe 30 through the pipe 31 by performing one jet operation, and controls the volume of the additive gas so as to ensure a necessary amount by performing the jet operation a predetermined number of times. That is, the gas supply control device 15 discretely supplies a predetermined volume of gas.

Since the volume per unit time of the recovered gas that flows in the pipe 30 is determined by the flow-rate control device MFC, the control device 12 can calculate the addition amount (replenishment amount) of the additive gas per unit time, to calculate the number of jets per unit time. Thus, a required addition amount of the additive gas can be added to the recovered gas.

The pipe 30 may include a mixer 13 downstream of a point at which the pipe 30 communicates with the pipe 31. The mixing uniformity of the additive gas and the recovered gas is improved in the mixer 13.

The purification treatment in step 5 is performed on the mixed gas to which the additive gas has been added.

To allow the flowing recovered gas to continuously undergo the processes of step 4 and step 5, the gas purification apparatus 100 performs step 4 and step 5 at the same time.

In addition, the entirety may be preferably covered with a housing 40 to keep the temperature constant. In particular, when the temperature of the flow-rate control device MFC and the temperature of the gas supply control device 15 are maintained to be equal to each other, more stable addition amount control is enabled.

### Step 5 (purification step)

The valve V6 and the valve V7 are set to an open state, and then the mixed gas of the recovered gas and the additive gas is introduced into the purifier 16 through the pipe 30, and is purified by the purifier 16.

If the additive gas has been determined to be unnecessary in step 3, the recovered gas, not the mixed gas, is purified by the purifier 16.

Hereinafter, if the additive gas has been determined to be unnecessary in step 3, the "mixed gas" means the "recovered gas".

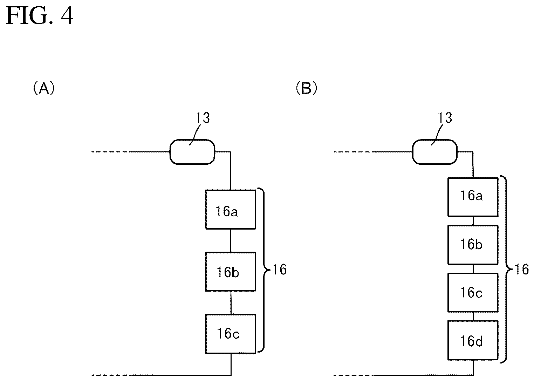

The purifier 16 may include a plurality of the purifiers, as a non-limiting example, as shown in FIG. 4.

FIG. 4 shows configuration examples of the purifier 16 in a non-limiting manner, FIG. 4(A) shows an example of a configuration including a first purifier 16a, a second purifier 16b, and a third purifier 16c, and FIG. 4(B) shows an example of a configuration including the first purifier 16a, the second purifier 16b, the third purifier 16c, and a fourth purifier 16d.

For example, the example shown in FIG. 4(A) includes the first purifier 16a that is a purifier for removing fluorocarbon (CF₄ and the like), the second purifier 16b that is a purifier for removing water, and the third purifier 16c that is a purifier for removing oxygen, and the example shown in FIG. 4(B) further includes the fourth purifier 16d that is a purifier (getter) for removing impurities that could not be removed. According to the use of the laser gas that is used, for example, for a KrF laser or for an ArF laser, either the configuration in FIG. 4(A) or the configuration in FIG. 4(B) may be selected. As the purifiers, known purifiers may be used, and may be operated under known conditions, respectively.

The configuration of the purifier 16 is not limited to the above, and a purifier required to maintain the quality of laser gas may be used.

The mixed gas that has undergone the purification treatment by the purifier 16 accumulates in the fourth tank 7, and the pressure in the fourth tank 7 is increased. Meanwhile, the pressure P6 of the gas in the third tank 6 decreases, and when the pressure P6 has reached a value less than or equal to a predetermined threshold Pt2 (e.g., a value that is 100 kPa to 200 kPa less than Pt1) (P6≤Pt2), the valve V6 and the valve V7 close, the purification step ends, and the process proceeds to step 6.

In general, a catalyst, an adsorbent, or the like with which gas comes into contact is used in the purifier 16 so as to remove impurities in the gas. Thus, due to the passage of the mixed gas through the purifier 16, the mixing uniformity of the recovered gas and the additive gas is further improved. In addition, since the mixed gas accumulates in the fourth tank 7, the mixing uniformity of the recovered gas and the additive gas is further improved in the fourth tank 7.

As described above, while the gas supply control device 15 discretely supplies the additive gas, the purifier 16 and the fourth tank 7 have an effect of improving mixing uniformity.

### Step 6 (purified-gas analysis step)

The valve V7 and the valve V8 are set to a closed state, and a valve VA2 in a pipe A2 that allows the fourth tank 7 and the gas analyzer 11 to communicate with each other is opened. Then, component analysis (impurity analysis) of the recovered gas (mixed gas) that has accumulated in the fourth tank 7 is performed by the gas analyzer 11.

The output from the gas analyzer 11 is inputted to the control device 12, which can calculate the concentration of each component and the concentrations of the other impurities.

If the component analysis has been completed, the valve VA2 enters a closed state.

The control device 12 compares the measured concentration of each impurity and a judgement value. If the concentration of the impurity is greater than the judgement value, the control device 12 determines that re-purification is necessary, and if the concentration of the impurity is not greater than the judgement value, the control device 12 determines that re-purification is unnecessary.

If the control device 12 has determined that re-purification is necessary, the process proceeds to step 7.

If the control device 12 has determined that re-purification is unnecessary, the process proceeds to step 8.

Here, the judgement value is determined based on the range of values that allow the laser-light generation device 1 to normally operate.

As described above, the purified mixed gas (recovered gas) is allowed to accumulate in the fourth tank 7 and the component thereof is analyzed, whereby quality control of the mixed gas can be performed.

In this step 6, the concentration of each component (additive gas) in the mixed gas may be analyzed (measured). If the concentration of the additive gas does not reach a predetermined range, it is also possible that step 7 is performed and the process proceeds to step 4 for re-addition and then proceeds to step 5.

### Step 7 (re-purification step)

The valve V3 and the valve V6 are set to a closed state, and a valve VB, the valve V4, and the valve V5 are set to an open state. Then, the recovered gas that has accumulated in the fourth tank 7 is introduced into the second tank 4 through a pipe B (bypass pipe), and is further fed under pressure to the third tank 6 by the second pump 5. The mixed gas accumulates in the third tank 6.

If the pressure P6 of the third tank 6 reaches a predetermined pressure Pt3 (e.g., the same value as Pt1) (P6≥Pt3), the control device 12 closes the valve VF, the valve V4, and the V5.

If it has been determined that the recovered gas needs to be re-purified, the fourth tank 7 and the second tank 4 are allowed to communicate with each other through the pipe B in this step 7 such that the recovered gas can move. In the other steps, moving of the recovered gas is blocked by the valve VB.

Then, the process proceeds to step 5.

As described above, the fourth tank 7 and the second tank 4 are connected to each other so as to be selectively allowed, by the pipe B and the valve VB, to communicate with each other or be blocked from each other, depending on the result of the gas analysis in step 6.

Here, "communicate" means a state in which the valve VB is in an open state and moving of the gas is allowed, and "blocked" means a state in which the valve VB is in a closed state and moving of the gas is blocked.

### Step 8 (purified-gas supply step)

If re-purification has been determined to be unnecessary in step 6, a valve V10 positioned downstream of the fifth tank 9 (supply tank) is set to a closed state, and the valve V8 and a valve V9 respectively positioned upstream and downstream of the third pump 8 are set to an open state. Then, the mixed gas that has accumulated in the fourth tank 7 is fed under pressure to the fifth tank 9 by the third pump 8. The mixed gas accumulates in the fifth tank 9.

If a pressure P9 of the mixed gas in the fifth tank 9 reaches a predetermined pressure Pt4 (e.g., the same value as Pt1) (P9≥Pt4), the valve V8 and the valve V9 enter a closed state.

Then, the valve V10 is opened, and the mixed gas that has accumulated in the fifth tank 9 is supplied to the laser-light generation device 1 through the second pipe 20 (supply pipe).

Before the valve V10 is opened, the component analysis of the mixed gas that has accumulated in the fifth tank 9 may be performed by the gas analyzer 11.

In this case, the valve V10 and the valve V9 are set to a closed state, and a valve VA3 in a pipe A3 that connects the fifth tank 9 to the gas analyzer 11 is set to an open state. Then, the component analysis of the mixed gas in the fifth tank 9 is performed by the gas analyzer 11. This contributes to quality control and quality assurance of the purified recovered gas.

Through the above steps, the recovered gas is purified and replenishment with the additive gas is performed, whereby laser gas is recycled, which contributes to reduction in operating costs of the laser-light generation device 1.

A plurality of the third tanks 6 may be provided and may be alternately used.

For example, two third tanks 6, that is, a third tank 6A and a third tank 6B, may be provided. Step 1 and step 2 are performed in the third tank 6A. Then, while step 3 and following steps are performed in the third tank 6A, step 1 and step 2 may be performed in the third tank 6B. The recovered gas may be allowed to accumulate in the third tank 6B, and the pressure of the recovered gas may be boosted therein.

After step 10 has been completed or while step 10 is being performed in the third tank 6A, step 3 and following steps may be performed in the third tank 6B.

The plurality of third tanks 6 are alternately used, which contributes to improvement of the use efficiency of the gas purification apparatus 100.

The plurality of the purifiers 16 may be provided parallel to each other and may be alternately used. For example, when the second purifiers 16b are the purifiers for adsorbing water and the third purifiers 16c are the purifiers for adsorbing oxygen, second purifiers 16b, 16b' may be respectively connected to third purifiers 16c, 16c'such that the connected purifiers are in parallel to each other, and purification operation, and regenerating operation for the purifiers may be alternately performed in parallel.

One purifier 16 (e.g., second purifier 16b and third purifier 16c) purifies the recovered gas, and another purifier 16 (e.g., second purifier 16b' and third purifier 16c') is regenerated, so that the operation of the gas purification apparatus 100 need not be stopped for regenerating the purifiers 16 and purification operation can be continuously performed.

For example, in a case where the second purifier 16b is the purifier for adsorbing water and is regenerated, the second purifier 16b is evacuated by a vacuum pump (not shown) to discharge adsorbed matters and the like inside the second purifier 16b, and then laser gas is supplied from a gas cylinder (not shown) into the second purifier 16b, to fill the second purifier 16b with the laser gas.

For example, valves are provided, on an upstream side and a downstream side of the second purifier 16b, to the pipe 30 connected to the second purifier 16b, and these valves are set to a closed state. A vacuum pump is connected to the pipe 30 between the second purifier 16b and the valve on the upstream side thereof, the second purifier 16b is evacuated, and then purge gas (e.g., argon) is supplied to the second purifier 16b through the pipe 30 between the second purifier 16b and the valve on the downstream side thereof. Then, supply of the purge gas is stopped, the second purifier 16b is evacuated, then operation of the vacuum pump is stopped, and the second purifier 16b may be filled with laser gas through the pipe 30 between the second purifier 16b and the valve on the downstream side thereof. The same applies to the third purifier 16c (e.g., purifier for adsorbing oxygen).

Hereinafter, the gas supply control device 15 that is a constant-volume gas supply device will be described in detail with reference to the drawings. The constant-volume supply device is a device that supplies a predetermined volume of gas per operation (jet).

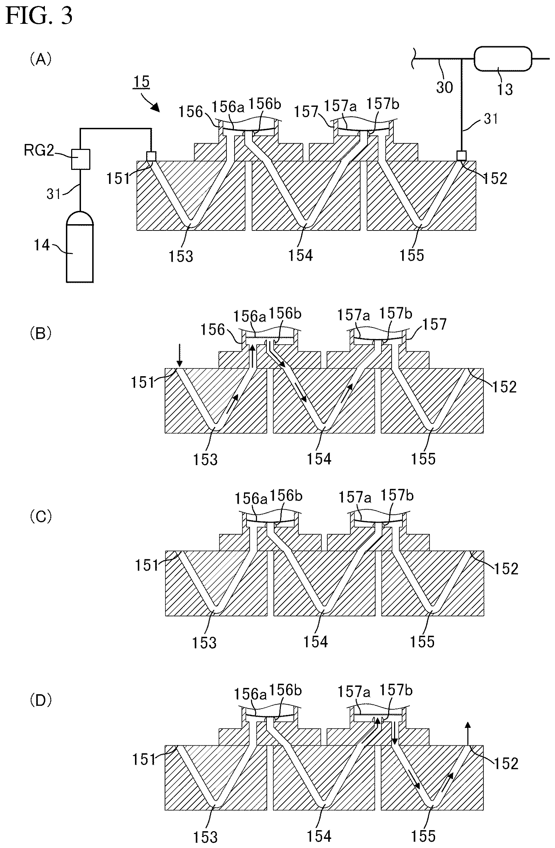

FIG. 3 is a sectional view showing a main configuration of the gas supply control device 15. FIG. 3(A) illustrates a connection relationship in the gas supply control device 15 of the gas purification apparatus 100, and FIGS. 3(B), (C), (D) are each a sectional view showing an operation of the gas supply control device 15.

The gas supply control device 15 includes an inflow port 151, an outflow port 152, an inflow passage 153, a constant-volume portion 154 (accommodation region), an outflow passage 155, a first valve 156 (inflow valve), and a second valve 157 (outflow valve). The first valve 156 and the second valve 157 are located at both ends of the constant-volume portion 154.

The first valve 156 includes a first valve body 156a and a first valve seat 156b, and the second valve 157 includes a second valve body 157a and a second valve seat 157b.

When the first valve body 156a and the first valve seat 156b are separated from each other, the first valve 156 enters an open state, and when the first valve body 156a and the first valve seat 156b come into contact with each other, the first valve 156 enters a closed state. Similarly, when the second valve body 157a and the second valve seat 157b are separated from each other, the second valve 157 enters an open state, and when the second valve body 157a and the second valve seat 157b come into contact with each other, the second valve 157 enters a closed state.

Here, a known configuration may be used for each valve that is operated. As a non-limiting example, for example, a diaphragm or the like may be used as the valve body, and the valve may be operated, for example, by an air (gas) driven method using compressed air or the like, or an electromagnetic drive method using an electromagnet or the like.

The inflow port 151 is connected to the gas cylinder 14 through the pipe 31 (addition pipe), and the outflow port 152 is connected to the pipe 31.

The additive gas in the gas cylinder 14 is supplied to the gas supply control device 15 through the pressure regulator RG2. The pressure regulator RG2 performs regulation such that the additive gas has a pressure (PG2=PG1+Pd) that is a predetermined amount Pd (e.g., 100 kPa) higher than the pressure (PG1) of the recovered gas set by the pressure regulator RG1 at the pipe 30.

The additive gas that has flowed out of the outflow port 152 of the gas supply control device 15 flows into the pipe 30 through the pipe 31.

A gas supply operation by the gas supply control device 15 will be described with reference to FIGS. 3(B), (C), (D).

Jet (shot) for supplying gas includes the following steps.

### Step 1 (inflow step)

As shown in FIG. 3(B), the second valve 157 is set to a closed state and the first valve 156 is set to an open state. As indicated by arrows in FIG. 3(B), the additive gas having a pressure regulated by the pressure regulator RG2 flows into the constant-volume portion 154, through the inflow port 151, the inflow passage 153, and the first valve 156.

### Step 2 (accommodation step)

As shown in FIG. 3(C), the first valve 156 is set to a closed sate and the second valve 157 is set to a closed state.

The additive gas is sealed in the constant-volume portion 154 by the first valve 156 and the second valve 157. The sealed additive gas has a volume equal to that of the constant-volume portion 154, and a pressure PG2 (accommodation pressure) regulated by the pressure regulator RG2. An addition amount is determined based on the gas accommodated in the constant-volume portion 154. A predetermined volume of the gas can be delivered per jet.

The volume (capacity) of the constant-volume portion 154 can be geometrically determined, and for the purpose of control of a minute amount, can be set to, but is not limited to, 0.1 to 1 cc as a non-limiting example, for example.

In this step, the additive gas is quantitatively determined.

### Step 3 (outflow step)

As shown in FIG. 3(D), while the first valve 156 remains in a closed state, the second valve 157 is set to an open state. The pressure PG2 of the additive gas accommodated in the constant-volume portion 154 is higher than the pressure PG1 of the recovered gas in the pipe 30, and thus the additive gas flows out of the gas supply control device 15 and flows into the pipe 30 through the second valve 157, the outflow passage 155, and the outflow port 152.

An addition amount of the additive gas per jet can be controlled based on the volume and the pressure of the constant-volume portion 154. Even a minute amount can be controlled by setting the volume of the constant-volume portion 154 so as to correspond to the addition amount (volume) to be controlled.

The amount of the additive gas can be regulated by controlling the number of jets, so that a necessary amount of the additive gas can be mixed with the recovered gas. The number of jets per unit time is calculated from the component concentration and the target component concentration of the recovered gas by the control device 12, and the control device 12 controls opening/closing of the first valve 156 and the second valve 157, to control the number of jets per unit time.

The control device 12 digitally controls opening/closing of the first valve 156 and the second valve 157, and the constant-volume supply device jets gas discretely (in pulses).

Conventionally, the additive gas is controlled based on a continuous amount, i.e., a gas flow, by a flow-rate control device that is a device for controlling a flow rate, specifically a mass flow controller. However, a finite amount of time is required for the flow rate to stabilize in the mass flow controller, and it is difficult to control a minute doping amount. In addition, in the mass flow controller, a trace of residual gas is present in a space (dead space) between a flow rate control portion and an opening/closing valve provided downstream of the flow rate control portion. Since this residual gas is present downstream of the flow rate control portion, the flow rate cannot be controlled, which makes it difficult to precisely control an addition amount. That is, in the flow rate control using the conventional mass flow controller, it is difficult to precisely control a minute supply amount of additive gas from the gas cylinder 14.

Meanwhile, in the gas supply control device 15, since the addition of gas is determined by the constant-volume portion 154 isolated by two valves, the dead space as in the mass flow controller is absent, and further, a finite amount of time is not required for the flow rate to stabilize. Therefore, the gas supply control device 15 is excellent in controlling a minute addition amount.

In addition, the gas supply control device 15 can be used not only to add gas in purification treatment of the recovered gas but also to supply laser gas in the start-up of the laser-light generation device 1. The gas supply control device 15 can control the minute addition amount of the additive gas, and thus laser gas having an optimum component concentration can be generated. The gas supply control device 15 can also be used for filling the laser chamber.

Since laser gas is generated and impurities are removed from the laser gas by the purifier 16, the laser chamber can be filled with laser gas having a higher degree of purity.

### Industrial Applicability

According to the present invention, with respect to laser gas that is used in a laser-light generation device, a minute addition amount of additive gas can be precisely controlled and the laser gas can also be re-purified, so that performance of removing impurities from recovered gas is improved, and high-quality recovered gas can be supplied. The present invention can contribute to reduction in operation costs of the laser-light generation device by recycling laser gas, and is highly applicable in the industry.

### Reference Signs List

100 gas purification apparatus
1 laser-light generation device
2 first tank (recovery tank)
3 first pump (recovery pump)
4 second tank (first storage tank)
5 second pump (boosting pump)
6 third tank (boosting tank)
7 fourth tank (second storage tank)
8 third pump (supply pump)
9 fifth tank (supply tank)
10 pipe (recovery pipe)
11 gas analyzer
12 control device
13 mixer
14 gas cylinder
14a first gas cylinder
14b second gas cylinder
15, 15a, 15b gas supply control device (constant-volume supply device)
151 inflow port
152 outflow port
153 inflow passage
154 constant-volume portion (accommodation region)
155 outflow passage
156 first valve (inflow valve)
156a first valve body
156b first valve seat
157 second valve (outflow valve)
157a second valve body
157b second valve seat
16 purifier (impurity removal device)
16a first purifier (impurity removal device)
16b second purifier (impurity removal device)
16c third purifier (impurity removal device)
16d fourth purifier (impurity removal device)
20 pipe (supply pipe)
30 pipe (main pipe)
31, 31a, 31b pipe (addition pipe)
40 housing
A1 pipe
A2 pipe
B pipe (bypass pipe)
MFC flow-rate control device (mass flow controller)
G6 pressure gage
RG1 pressure regulator
RG2, RG2a, RG2b pressure regulator
V1 to V10 valve
VA1, VA2 valve

## Claims

1. A gas purification apparatus for purifying recovered gas recovered from a laser-light generation device that uses laser gas and for supplying the recovered gas that has been purified to the laser-light generation device, the gas purification apparatus comprising:
a flow-rate control device that controls a flow rate of the recovered gas;
a constant-volume supply device that is provided downstream of the flow-rate control device and that supplies an additive gas; and
a purifier provided downstream of the constant-volume supply device.

2. The gas purification apparatus according to claim 1, wherein the constant-volume supply device discretely supplies the additive gas.

3. The gas purification apparatus according to claim 2, wherein
the constant-volume supply device includes a constant volume portion, a first valve, and a second valve, and
the first valve and the second valve are located at both ends of the constant volume portion.

4. The gas purification apparatus according to any one of claims 1 to 3, further comprising:
a first storage tank provided upstream of the flow-rate control device; and
a second storage tank provided downstream of the purifier, wherein
the first storage tank and the second storage tank are connected to each other so as to be allowed to communicate with each other or to be blocked from each other.

5. The gas purification apparatus according to claim 4, further comprising a gas analyzer, wherein
the gas analyzer performs component analysis of gas in the first storage tank.

6. A method for purifying laser gas, comprising:
a recovery step of recovering laser gas from a laser-light generation device;
a recovered-gas analysis step of analyzing the gas that has been recovered and determining whether or not an additive gas needs to be added;
an addition step of adding, performed by a constant-volume supply device, the additive gas, if it has been determined, in the recovered-gas analysis step, that the additive gas needs to be added;
a purification step of purifying the recovered gas;
a purified-gas analysis step of performing component analysis of the recovered gas purified in the purification step and determining whether or not re-purification is necessary; and
a re-purification step of performing the purification step, if it has been judged, in the purified-gas analysis step, that re-purification is necessary.
